Europäisches Patentamt

European Patent Office

Office européen des brevets

(19)

(11) Numéro de publication : **0 369 834 B1**

(12) **FASCICULE DE BREVET EUROPEEN**

(45) Date de publication du fascicule du brevet :
20.05.92 **Bulletin 92/21**

(51) Int. Cl.⁵ : **F16L 33/22, F16L 21/02**

(21) Numéro de dépôt : **89402778.8**

(22) Date de dépôt : **10.10.89**

(54) **Procédé de réalisation d'un jonctionnement formant collier de serrage par retournement d'anneau torique pour tuyau decaoutchouc renforcé.**

(30) Priorité : **17.11.88 FR 8814944**

(43) Date de publication de la demande :
**23.05.90 Bulletin 90/21**

(45) Mention de la délivrance du brevet :
**20.05.92 Bulletin 92/21**

(84) Etats contractants désignés :
**AT BE CH DE ES FR GB GR IT LI LU NL SE**

(56) Documents cités :
**AT-B- 162 986**

(56) Documents cités :
**DE-U- 1 934 850**
**DE-U- 1 953 840**
**FR-A- 784 239**
**GB-A- 324 854**
**US-A- 2 759 254**

(73) Titulaire : **CAOUTCHOUC MANUFACTURE ET PLASTIQUES SOCIETE ANONYME**
**143 bis, rue Yves Le Coz**
**F-78000 Versailles (FR)**

(72) Inventeur : **Bechu, Jean-Pierre**
**"Les Poissons" 20 ter, rue de Bezons**
**F-92400 Courbevoie (FR)**

EP 0 369 834 B1

Jouve, 18, rue Saint-Denis, 75001 PARIS

## Description

L'invention s'applique à la jonction de tuyaux souples à un organe rigide d'alimentation ou d'utilisation, généralement équipé d'un embout où vient se fixer ledit tuyau.

Les systèmes de connexion-déconnexion rapide par embouts rigides sont légion, qu'ils soient à systèmes mâle-femelle avec joint d'étanchéité radiale ou bien à connexion symétrique par serrage axial. La liaison d'un embout rigide à la partie souple d'une canalisation qui permet l'usage de ces systèmes se fait, le plus généralement, par un collier de serrage radial après emmanchement du tuyau souple sur un cylindre avec plus ou moins de précontrainte de façon à s'opposer aux plus fortes pressions du fluide véhiculé ou, sous forme non récupérable, par confection et vulcanisation sur une bride.

Les domaines concernés pourraient être, sans prétendre à une liste exhaustive, ceux d'emploi des tuyaux souples composés d'élastomères, par opposition aux systèmes d'accrochage récupérables, utilisant un pincement à secteurs, coins ou colliers, basés sur une certaine rigidité de la canalisation, qu'elle soit en métal ou en plastique.

Les applications les plus pertinentes sont les raccordements de petits tuyaux sous pression pour la peinture, la pulvérisation de produits liquides, la chimie et l'industrie alimentaire, mais aussi les durites de radiateurs pour automobile et autres moteurs thermiques, et, dans le bâtiment, les raccordements souples à des canalisations rigides tels que les joints de dilatation ou les siphons de lavabo.

A partir de produits banalisés, la technique décrite permet l'emploi, par tout utilisateur, d'éléments préalablement prépositionnés par un artisan qualifié et autorise, de ce fait, une récupération desdits éléments au moyen d'un outillage simple.

Elle s'applique, donc, préférentiellement, à la distribution de produits industriels de grande utilisation, ou bien à l'automatisation du montage de sous-ensembles préparés dans un atelier.

Le principe de l'embout cylindrique à collier de serrage sur tuyau souple a été perfectionné, au cours des temps, par évolution de chacun de ses composants :

a) L'embout rigide , lui-même à bride ou fixation par vis-écrou tournant, peut comporter un cylindre plus ou moins rugueux, plusieurs cannelures en forme d'olives permettant un passage forcé du tuyau souple, ou des crantages tronconiques à arêtes vives s'opposant à l'arrachage - éventuellement en forme d'hélice - permettant le montage du tuyau par un vissage dans la matière brute. Une définition d'une section en dents de scie est donnée, par exemple, dans le brevet WO-A-87/00905 de BMW.

b) Le collier de serrage radial peut être réversible ou non, par enroulement d'une languette métallique, par vis-écrou agissant comme une sangle, par vis tangente et système à crémaillère, ou bien avec déformation de métal par sertissage en plusieurs secteurs, ou rétreint radial homogène. Les progrès les plus récents sont décrits dans les brevets FR-A-2 487 927 de TRIDON SERFLEX, FR-A-2 496 831 de SERFLEX INDUSTRIES, FR-A-2 313 583 et FR-A-2 313 584 de S.O.G.P.I. qui proposent différentes améliorations aux systèmes à vis tangente ou le brevet EP-A-236 217 des Etablissements CAILLAU, relatif à un dispositif à languette métallique. Le fonctionnement dudit collier est toujours basé sur une précompression volumétrique de l'élastomère du tuyau; la performance dépend donc du facteur de forme des surfaces en regard , caractérisé par le rapport de surface des appuis rigides - embout interne et collier confinant extérieurement la matière - à la surface restée libre du tuyau où cette matière pourra s'expanser vers l'extérieur.

c) Le renforcement du tuyau par des éléments, enroulés en hélices multiples, guipés ou tressés au coeur de la matière augmente toujours la performance de ce serrage, indépendamment de son rôle d'amélioration de la résistance à la pression dans le corps dudit tuyau du fait du frettage de l'élastomère, assuré par lesdits éléments de renforcement.

Les matières plastiques, renforcées ou non, n'utilisent dans cette fonction que la partie élastique de leur déformabilité volumétrique. Il est de connaissance courante que le fluage oblige à souvent resserrer les colliers sur tuyaux en matière plus ou moins "plastique".

Lorsque la matière est soumise à une fatigue alternative, en pulsations de pression, mais beaucoup plus souvent par les flexions alternées au cours des manipulations, les limites entre le collier et la surface libre se détériorent par dépassement local de la résistance à la rupture. Il en est de même sur les arêtes des crantages perfectionnant l'embout qui sollicitent exagérément la résistance locale de la matière. La déchéance d'une fixation par collier se produit toujours de façon brutale ou progressive - du fait d'une localisation des contraintes cumulées à la limite des parties rigides et de parties déformables. L'invention décrite dans le document FR-A-784239, de LEVEQUE, a pour but de limiter la discontinuité des contraintes aux points singuliers. Elle est caractérisée par l'utilisation d'un anneau de caoutchouc, ayant un diamètre un peu inférieur au diamètre extérieur du tuyau à raccorder entourant le raccord. Il est facile de déplacer l'anneau en le faisant rouler sur lui-même par traction de sorte qu'il applique fortement le tuyau autour des renflements du raccord à équiper. Cependant, les contraintes de traction permanentes dans ledit anneau de caoutchouc soumettent la matière de celui-ci à un risque de vieillissement accéléré, sous l'action de l'atmosphère extérieure et, de ce fait, à la perte de ses caractéristiques mécaniques.

L'invention proposée a pour but de remédier à ces inconvénients. Pour ce faire, un, ou plus commodément au moins deux, anneaux toriques de caoutchouc, couramment commercialisés sous forme de joints toriques d'étanchéité ou "O Ring", sont interposés entre la zone à serrer et un manchon cylindrique rigide. Celui-ci vient les écraser autant que nécessaire, par déplacement axial au-dessus du tuyau engagé sur l'embout.

Ce mouvement consiste en un roulement sur lui-même de chaque anneau torique, sans glissement entre les faces cylindriques ou approximativement cylindriques qui l'enserrent, chaque anneau faisant un ou plusieurs tours complets sur lui-même, de façon à retrouver le même état de répartition des contraintes avant et après un tour. Ceci est exécuté dans des conditions dynamiques pendant les quelques instants que dure la manoeuvre.

L'élastomère constituant ces tores est réputé conserver longtemps une résistance à des sollicitations comparables au triple de la pression d'épreuve du tuyau - condition d'étanchéité requise habituellement - et c'est une propriété des "vrais" élastomères, tels les caoutchoucs naturels ou synthétiques de pouvoir supporter quelques instants des contraintes beaucoup plus élevées - telles dix fois la pression nominale, par exemple - sans destruction.

L'invention est donc un procédé réalisation d'un jonctionnement, semi-démontable et permettant la récupération entre un tuyau en élastomère renforcé et un embout rigide, sensiblement cylindrique, basé sur l'écrasement radial de l'extrémité du tuyau, par au moins un anneau torique de caoutchouc, comportant les étapes suivantes :

– préparation d'un manchon cylindrique, engagé librement sur l'extrémité d'un tuyau, de préférence au moyen d'un bati de montage, à une cote prédéterminée pour forcer un anneau torique à entrer dans le manchon cylindrique par striction du tuyau ;

– avancement du manchon cylindrique de deux intervalles de retournement, de façon que l'anneau torique avance, lui, d'un intervalle par rapport au tuyau ;

– répétition éventuelle de l'opération, si nécessaire avec un petit recul élastique, pour engager un second anneau torique à l'entrée du manchon cylindrique, en position d'équilibre stable ;

– engagement à force de l'extrémité du tuyau sur l'embout, par la manoeuvre usuelle de montage d'un tuyau souple sur un embout ;

– verrouillage par déplacement axial du manchon cylindrique d'une course égale à deux intervalles de retournement, par rapport à l'extrémité du tuyau, de façon que le ou les anneaux toriques franchissent, à travers l'épaisseur du tuyau, les cannelures de plus fort diamètre ménagées sur l'embout, en parcourant un intervalle de retournement ;

et de façon que chaque anneau torique roule sur lui-même, sans glissement, entre les faces sensiblement cylindriques qui l'enserrent et fait, dans ce mouvement, un ou plusieurs tours complets sur lui-même.

L'invention sera mieux comprise à la lecture de la description accompagnant les dessins, dans lesquels :

– la figure 1 représente les composants séparés à la présentation avant assemblage.

– La figure 2 représente l'assemblage du tuyau engagé sur embout, avant le verrouillage.

– La figure 3 représente le système de jonctionnement, après verrouillage.

– La figure 4 représente les composants au cours de la préparation du pré-assemblage.

– La figure 5 représente une autre application du même système de jonctionnement, différant par les dispositions relatives.

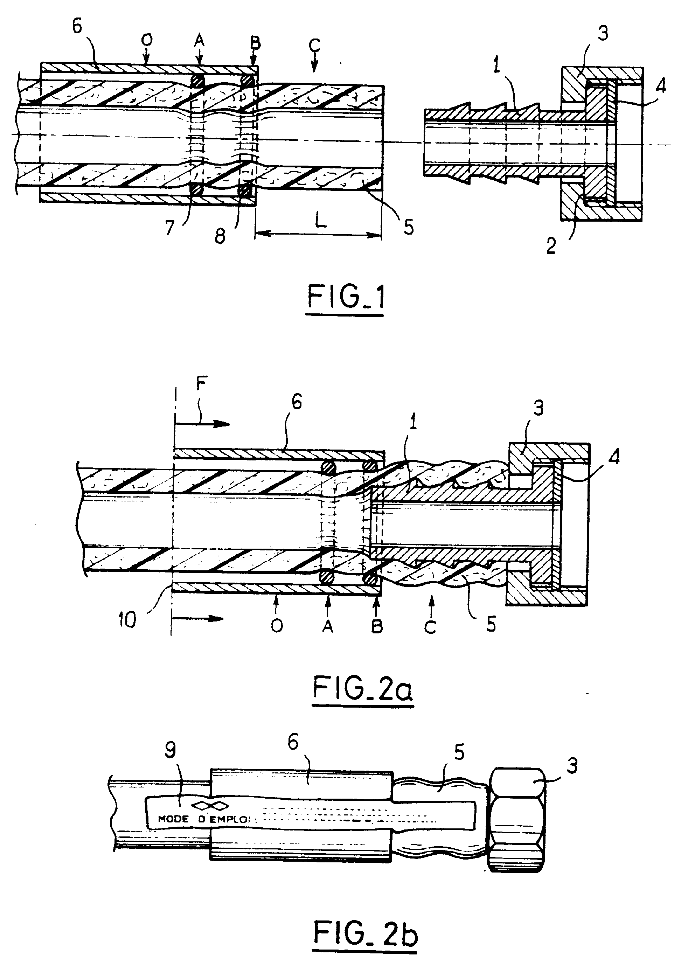

La figure 1 est une présentation, en coupe axiale, des composants séparés tels que préparés en vue de l'assemblage. Un embout (1) rigide - réalisé en un matériau métallique ou plastique, tel qu'un plastomère renforcé de fibres de verre- est constitué d'un tube, le plus souvent sensiblement de même diamètre intérieur que le tuyau souple à raccorder, avec un épaulement (2) où s'appuie un écrou tournant (3) qui sert à la fixation amovible sur un organe d'alimentation (pompe ou robinet) ou d'utilisation ou de raccord. Dans cet usage, l'étanchéité du raccordement est assurée par un joint annulaire plat (4), serré axialement par ce système vis-écrou ; elle ne nécessite pas de précaution entre les composants (1) et (3) sur leur épaulement (2) tournant.

L'extrémité du tuyau (5), en élastomère renforcé, est coiffée d'un manchon cylindrique (6), rigide, qui peut être une simple coupe de tube d'acier ou de plastique du commerce, éventuellement légèrement renflée ou chanfreinée là où il le faut, mais apparemment cylindrique.

Dans la variante représentée, deux anneaux toriques d'élastomère (7) et (8), qui peuvent être des joints toriques du commerce, sont emprisonnés dans l'espace entre l'extrémité du tuyau (5) et le manchon (6), dans une position désignée par (A) et (B), sur une échelle dont l'intervalle correspond à un retournement complet d'un anneau torique par roulement sans glissement.

L'extremité du tuyau (5) est en dépassement du manchon cylindrique (6) d'une longueur (1), caractéristique de l'invention, car l'anneau torique (8) est à peine engagé sous l'extrémité du manchon cylindrique (6), en position (B). Si ledit manchon cylindrique (6) est reculé par rapport à l'extrémité du tuyau (5), l'anneau torique (8) reste en place, tandis que l'anneau torique (7) recule d'une course moitié de celle visible. Le manchon cylindrique (6) doit reculer, non pas d'un intervalle sur l'échelle des déplacements, mais de (B) en (O), pour que l'anneau torique (7) se trouve dégagé dans le plan (O), à la lisière du manchon cylindrique (6).

Quand l'extrémité du tuyau (5) n'est pas engagée sur un embout rigide, la déformation des armatures de renfort permet ce roulement par une striction du tuyau, sous les anneaux toriques jusqu'à un diamètre plus faible que son diamètre nominal et ceci sans grande contrainte. Cette striction est admise par une légère rotation des armatures qui, en principe, présentent un angle de 54 degrés par rapport à l'axe, pour que les variations de pression ne modifient pas la longueur du tuyau. La définition d'un intervalle de retournement des anneaux toriques est donc expérimentale. En effet de petits déplacements longitudinaux de la matière du tuyau accompagnent le passage de la matière -elle-même élastomérique- des anneaux toriques se portant du plus grand vers le plus petit diamètre du tore. Seul, théoriquement, le cercle générateur du tore devrait être conservé dans le roulement. Mais, le serrage extérieur, par le manchon cylindrique (6), réduit aussi, par contrainte homogène, le diamètre de ce cercle à une valeur très voisine du diamètre extérieur, à l'état libre, du tuyau souple. Le jeu entre ce dernier et le manchon cylindrique (6) a comme ordre de grandeur la moitié de l'épaisseur du tore (c'est-à-dire le rayon primitif) et la déformation locale du tuyau a le même ordre de grandeur.

La vue 2a représente, en coupe axiale, les mêmes composants que précédemment, lorsqu'est engagée à force, par une manoeuvre usuelle dans tous les montages de tuyau souple sur embout rigide, l'extrémité du tuyau (5) sur l'embout (1).

Cet effort se fait presque toujours manuellement car l'évasement du tuyau en élastomère renforcé nécessite une sollicitation axiale, qui a pour effet d'accroître l'angle des armatures de renfort, qu'elles soient enroulées en hélices, guipées ou tressées. L'accroissement de leur angle par rapport à l'axe provoque un gonflement du diamètre primitif de l'armature, favorable à l'emmanchement à force, mais le passage sur un diamètre d'une valeur supérieure à la valeur initiale est facilement instable et demande un centrage visuel, avec généralement maintien du tuyau par serrage manuel. Cette manoeuvre empêche l'automatisation du montage, pour les durites de radiateurs d'automobile, par exemple.

Dans les cas difficiles, il est opportun de fixer temporairement le manchon cylindrique (6) à l'extrémité du tuyau (5), pour éviter un déplacement axial relatif, par exemple par un ruban adhésif représenté en (9) sur la vue extérieure 2b.

Le fabricant peut utiliser ledit ruban pour y imprimer le mode d'emploi à arracher après cette opération, au moment où, habituellement, cet emmanchement doit être maintenu par un collier de serrage. Pour cette raison le ruban adhésif (9) peut être formé d'une ou plusieurs bandes longitudinales n'entourant pas la totalité du tuyau. Le mouvement nécessaire au verrouillage caractéristique de l'invention est indiqué par la flèche (F) sur la vue 2a. L'extrêmité (10) du manchon cylindrique (6) est nécessairement mince et fragile, car d'épaisseur faible, un exemple pouvant être 1,5 millimètre en tube d'acier, 3,5 millimètres en polychlorure de vinyle rigide, valeur encore réduite par la présence de chanfreins.

L'opérateur non initié rencontrerait de grandes difficultés pour exercer alors un mouvement vif en appui sur l'extrêmité (10) en prenant réaction sur l'embout (1) par l'intermédiaire du joint (4), ou à la rigueur sur l'écrou tournant (3) où vient buter l'extrémité du tuyau (5), après que l'emmanchement ait été effectué.

Pour la bonne réussite de cette opération, des mâchoires cylindriques entourant le manchon cylindrique (6) constituent un outillage nécessaire. Elles s'ouvrent, par exemple, en deux parties semi-cylindriques, avec un faible épaulement, pour se caler sur l'extrêmité (10). Tout l'effort axial peut passer si nécessaire par adhérence sur l'extérieur du manchon cylindrique (6), qui peut être rugueux, cannelé ou moleté dans ce but. En particulier, la réalisation dudit manchon cylindrique (6) par une coupe à longueur de tuyau en polychlorure de vinyle rigide du commerce, (une dimension normalisée en plomberie de 25 x 32 mm, s'adaptant opportunément avec les tuyaux du genre arrosage), ne résisterait pas à elle seule à l'éclatement, au cours de la manoeuvre de retournement des joints toriques.

Au contraire, le verrouillage des mâchoires constituant l'outillage lui permet de résister à cet effort diamétralement intense pendant que chaque joint torique doit franchir, à travers l'épaisseur du tuyau, les cannelures de plus fort diamètre, ménagées sur l'embout (1).

Lesdites cannelures peuvent être soit des olives (uniques ou multiples), soit des crantages tronconiques s'opposant au sens de l'arrachement, selon la conception de l'embout.

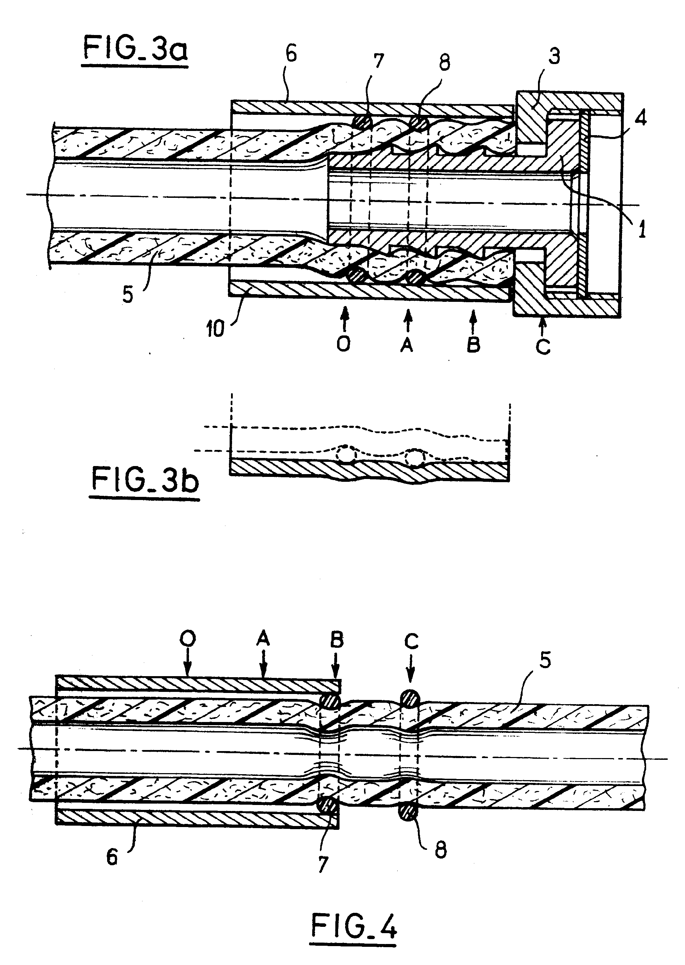

La figure 3 représente, en coupe axiale, la position des éléments après la manoeuvre d'assemblage axial. Après ladite manoeuvre, les mâchoires sont relachées et le manchon cylindrique (6) résiste alors seul au maintien des anneaux toriques (7), (8) parvenus dans le plan du diamètre situé en retrait au delà des olives ou des crantages.

Si ledit manchon cylindrique (6) est en matériau plastique, une déformation légère, due au fluage, est possible dans cette position et ne peut qu'accroître l'effort nécessaire pour revenir en dehors de cette position. Ceci est dû à l'alternance de légers bombés dans les plans (O) et (A) où se situent les anneaux toriques (7) et (8) et de diamètres plus restreints dans les plans intermédiaires, correspondant aux olives ou crantages.

Lorsque le manchon cylindrique (6) est réutilisé, il présente donc ces très légères différences par rapport à un cylindre pur. Il est possible, par formage à chaud par exemple, d'apporter, dès l'état neuf, ces différences par rapport au cylindre brut, comme représenté en vue 3b. Cette forme, quasi cylindrique, peut être imposée par une forme conjuguée des mâchoires servant d'outillage au cours de la manoeuvre de verrouillage.

Dans cette représentation, est illustrée la position, montrée après verrouillage, des deux anneaux toriques (7) et (8) qui partis des positions (A) et (B) avant la manoeuvre de forcement axial du manchon cylindrique (6) se retrouvent dans les plans (O) et (A) selon les repères attachés au manchon cylindrique (6). Celui-ci doit parcourir une course double, soit la longueur (1) décrite en figure 1. Le plan (C) est un repère supplémentaire, mais n'est pas matériellement contenu par le manchon cylindrique (6). Il représente la position où devrait être maintenu un troisième anneau torique pour, dans une autre variante non représentée, venir prendre place dans le plan (B). Une pièce amovible au cours de la manoeuvre de verrouillage - décomposée alors en deux temps - doit être fixée aux mâchoires constituant l'outillage pour permettre ce type de montage.

Pour démonter l'assemblage représenté, sans destruction totale, il suffit de disposer des mêmes mâchoires servant d'outillage, mais retournées pour que leur épaulement se cale sur l'extrémité du manchon cylindrique (6) opposée à celle (10) ayant servi au montage, ou bien que ces mâchoires soient symétriques.

Mais le point d'appui de l'outillage n'est plus en appui simple, par exemple sur le joint annulaire plat (4), car la manoeuvre demande d'exercer une traction.

L'outillage doit alors comprendre, de façon préférentielle, une vis conjuguée à l'écrou tournant (3) bloqué, par la manoeuvre, sur le joint annulaire plat (4). Cette vis sera articulée par des leviers, faisant parallélogramme déformable ou des systèmes à vis, pour déplacer axialement les mâchoires enserrant le manchon cylindrique (6) comme dans divers systèmes connus de l'art antérieur tels que tire-bouchons ou arrache-moyeux.

Un procédé destructif de démontage, avec récupération du tuyau, consiste à couper la partie abimée de l'extrémité du tuyau (5), dépassant alors du manchon cylindrique (6), et opérer le même effort en prenant appui sur l'extrêmité, dégagée par ce moyen, de l'embout (1).

Après récupération (ou remplacement) des anneaux toriques (7) et (8), l'opérateur se trouve dans la nécessité de préparer la présentation des pièces.

Ainsi, la figure 4 représente les composants de la partie gauche de la figure 1 au début de l'assemblage, avant le retournement du premier anneau torique (7). Le manchon cylindrique (6), étant engagé librement sur l'extrémité du tuyau (5) en élastomère renforcé, le jeu est de l'ordre du rayon primitif des tores, c'est à dire de la moitié de l'épaisseur des anneaux toriques. Ces deux éléments étant positionnés, de préférence au moyen d'un bâti de montage, à une cote déterminée par l'expérience, de l'ordre de (1) + 2 fois un intervalle A-B de retournement d'anneau torique, le premier anneau torique (7) est forcé pour entrer dans le manchon cylindrique (6), par striction du tuyau, ladite striction étant possible par rotation locale de l'angle des armatures hélicoïdales, guipées ou tressées enrobées par l'élastomère constituant le tuyau. Le manchon cylindrique (6) est alors avancé de deux intervalles par rapport à l'extrémité du tuyau (5), de façon que l'anneau torique (7) avance, lui, d'un intervalle, par roulement sans glissement, et ceci par effort modéré aisément maitrisable à la main. Un manchon auxiliaire, non représenté, en forme de tube mince, guidera opportunément le début du mouvement, depuis la position représentée ici.

Les composants (5) (6) et (7) se retrouvent en équilibre stable, dans la position représentée à la figure 1. Il reste à y engager, si nécessaire avec un petit recul élastique, l'anneau torique (8), à l'entrée du manchon cylindrique (6), au moyen du manchon auxiliaire. Ladite position d'équilibre est stable à la condition que les anneaux toriques (7) et (8) se retrouvent dans leur position de repos sans contrainte de retournement; ils subissent juste une contrainte centripète, sous l'effet du manchon cylindrique (6) qui les déforme d'une demi-épaisseur environ.

Dans des variantes non représentées où le nombre d'anneaux toriques est supérieur à deux, la manoeuvre de retournement est renouvelée, le seul effet étant que le manchon cylindrique (6) présente vers l'embout (1) une partie inutilisée qui recouvre l'extrémité du tuyau (5), protégeant au besoin celui-ci, mais sans serrage au-delà du dernier anneau torique. Un intérêt non négligeable est que le jeu entre le manchon cylindrique (6) et l'extrémité du tuyau (5), gonflée par le dernier relief, olive ou crantage tronconique de l'embout (1), est à peu près nul dans cette zone.

Le manchon cylindrique (6) et l'embout (1) sont, de ce fait, maintenus co-axiaux; s'ils ne l'étaient pas, une rotation sphérique pourrait se produire dans les chocs ou les manipulations, d'autant plus prononcée que l'intervalle entre les deux anneaux toriques (7) et (8) serait plus faible, ou que l'anneau torique serait unique.

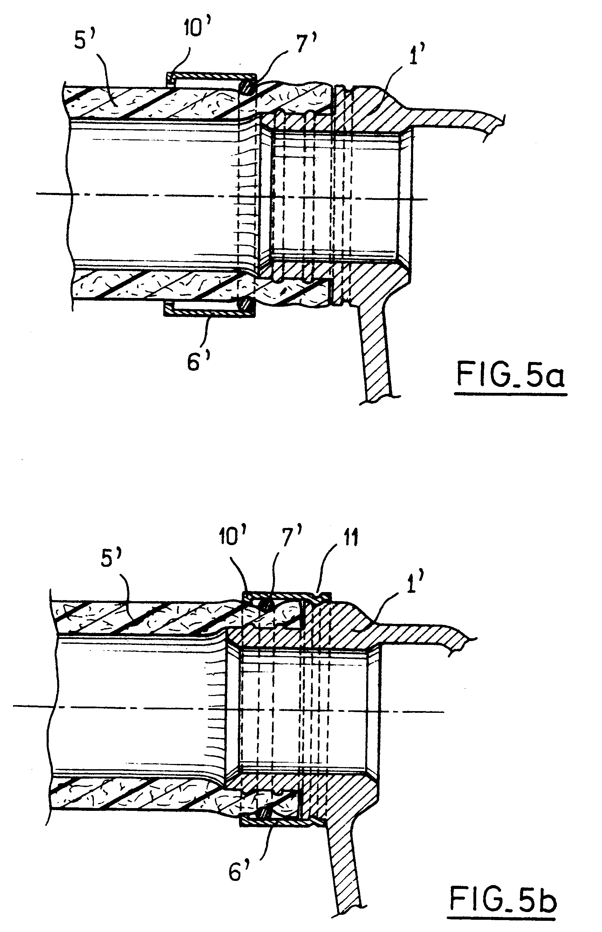

La figure 5 représente ce dernier cas, une application pouvant être la fixation des durites sur radiateur et sur moteur d'automobile. Les composants sont les mêmes, représentés en vue 5b dans la position verrouillée en place (analogue à la figure 3), à l'exception de l'anneau torique (7'), unique dans cette variante, la vue 5a correspondant à la présentation des composants engagés sur l'embout (analogue à la figure 2).

L'épaisseur de l'extrémité de la durite (5') étant nettement plus élevée que celle de l'anneau torique, sa déformabilité est plus grande et correspond pratiquement à l'épaisseur de celui-ci. Le manchon cylindrique (6') glisse donc, sans jeu, sur l'extérieur de la durite à son extrêmité libre et sa butée sur l'embout (1') participe également au maintien contre les basculements et toutes sollicitations latérales dues aux débattements. Dans la variante représentée, ledit embout (1') est monobloc, solidaire du radiateur et non pas amovible.

Un même effet est apporté, par exemple, par une surépaisseur interne (10'), avec léger serrage sur la durite (5'), surépaisseur renforçant la rigidité du manchon cylindrique (6') tout en laissant libre la position atteinte par l'anneau torique (7') en position verrouillée de la vue 5b. Cette surépaisseur rend également moins fragile le manchon cylindrique (6'), pour la manoeuvre de déplacement axial, et permet la fabrication dudit manchon cylindrique (6') par moulage de matériaux tels que les plastiques chargés.

Un blocage par sertissage représenté en (11) sur la vue 5b ou par systèmes connus par ailleurs de type baïonnette, par légère rotation du manchon cylindrique (6') pourra alors assurer la sécurité contre un démontage par recul axial accidentel de celui-ci, le rappel élastique étant toujours assuré par le retournement de l'anneau torique (7'). Ce blocage peut servir éventuellement de plombage de garantie. En résumé l'invention permet, par une utilisation appropriée de produits courants, une amélioration de la jonction chaque fois qu'un tuyau flexible doit être relié à un embout rigide. La méthode d'assemblage permet au besoin d'exercer des efforts de serrage radiaux élevés sans que se produise une localisation des contraintes aux bords d'un collier rigide.

La nécessité de disposer d'un outillage - même simple - permet d'éviter les détériorations par des manipulateurs non initiés. Grâce au pré-positionnement, l'assemblage peut être réalisé par tout utilisateur ou automatisé. La récupération du tuyau malgré une perte de longueur est totalement possible et un nouveau montage avec des composants disponibles dans le commerce est alors réalisable par un artisan qualifié.

**Revendications**

1. Procédé réalisation d'un jonctionnement, semi-démontable et permettant la récupération entre un tuyau en élastomère renforcé et un embout rigide, sensiblement cylindrique, basé sur l'écrasement radial de l'extrémité du tuyau, par au moins un anneau torique de caoutchouc, comportant les étapes suivantes :

    – préparation d'un manchon cylindrique (6,6'), engagé librement sur lextrémité d'un tuyau (5,5'), de préférence au moyen d'un bati de montage, à une cote prédéterminée pour forcer un anneau torique (7) à entrer dans le manchon cylindrique (6,6') par striction du tuyau (5,5') ;

    – avancement du manchon cylindrique de deux intervalles de retournement, de façon que l'anneau torique (7) (7') avance, lui, d'un intervalle par rapport au tuyau (5,5') ;

    – répétition éventuelle de l'opération, si nécessaire avec un petit recul élastique, pour engager un second anneau torique (8) à l'entrée du manchon cylindrique (6,6'), en position d'équilibre stable ;

    – engagement à force de l'extrémité du tuyau (5,5') sur l'embout (1), par la manoeuvre usuelle de montage d'un tuyau souple sur un embout ;

    – verrouillage par déplacement axial du manchon cylindrique (6,6') une course égale a deux intervalles de retournement, par rapport à l'extrémité du tuyau (5,5'), de façon que le ou les anneaux toriques (7) (7') (8) franchissent, à travers l'épaisseur du tuyau, les cannelures de plus fort diamètre ménagées sur l'embout (1), en parcourant un intervalle de retournement ; et de façon que chaque anneau torique roule sur lui-même, sans glissement, entre les faces sensiblement cylindriques qui l'enserrent et en ce qu'il fait, dans ce mouvement, un ou plusieurs tours complets sur lui-même.

2. Procédé de réalisation d'un jonctionnement semi-démontable, selon la revendication 1, caractérisé en ce que deux anneaux toriques (7) et (8) effectuent un tour, chacun sur lui-même, au cours de la manoeuvre de verrouillage axial du manchon cylindrique (6) qui parcourt ainsi une course double du déplacement réel desdits anneaux toriques (7) et (8), par rapport à l'embout (1) sur lequel se trouve serrée l'extrémité du tuyau (5).

3. Procédé de réalisation d'un jonctionnement semi-démontable, selon la revendication 1, caractérisé en ce que plusieurs anneaux toriques effectuent, chacun sur lui-même, au moins deux tours, au cours de la manoeuvre de verrouillage axial du manchon cylindrique (6) pour franchir les renflements, olives ou crantages ménagés sur l'embout (1).

4. Procédé de réalisation d'un jonctionnement semi-démontable, selon la revendication 1, caractérisé en ce qu'un anneau torique (7') effectue un tour sur lui-même au cours de la manoeuvre de verrouillage axial du manchon cylindrique (6') pour franchir un renflement ménagé sur l'embout (1'), ledit manchon cylindrique (6') venant buter sur un épaulement de l'embout (1') où il est ensuite serti ou verrouillé par un système du genre baïonnette.

**Patentansprüche**

1. Verfahren zum Herstellen einer halblösbaren Verbindung, die eine Wiederverwendung erlaubt, zwischen einem Schlauch aus verstärktem Elastomer und einem im wesentlichen zylindrischen Ansatzstück durch radiales Zusammendrücken des Schlauchendes mittels mindestens eines torischen Gummirings mit folgenden Verfahrensschritten:
 – Vorsehen einer zylindrischen Hülse (6,6′), die frei über das Ende des Schlauches (5,5′) greift, vorzugsweise mittels eines Montagegestells an einer vorbestimmten Stelle um einen torischen Ring (7) unter Zusammendrücken des Schlauches (5,5′) in die zylindrische Hülse (6,6′) hineinzudrücken;
 – Vorschieben der zylindrischen Hülse in zwei Umdrehungsintervallen, so daß der torische Ring (7,7′) seinerseits in Bezug auf den Schlauch (5,5′) um ein Intervall vorrückt;
 – ggf.: Wiederholung des Vorgangs, falls erforderlich mit einem kleinen elastischen Rücklauf, um einen zweiten torischen Ring (8) am Einführungsende der zylindrischen Hülse (6,6′) in eine stabile Gleichgewichtslage zu bringen;
 – zwangsweises Aufschieben des Endes des Schlauches (5,5′) auf das Ansatzstück (1) durch für die Verbindung eines flexiblen Schlauches mit einem Ansatzstück übliche Montageschritte;
 – Verriegelung durch axiale Verschiebung der zylindrischen Hülse (6,6′) in Bezug auf das Ende des Schlauches (5,5′) um eine Strecke gleich dem Abstand zweier Umdrehungsintervalle, so daß der (oder die) torische(n) Ring(e) (7,7′,8) im Durchlaufen eines Umdrehungsintervalles innerhalb der Schlauchstärke auf dem Ansatzstück (1) ausgebildete Wellen größten Durchmessers überwinden und zwar derart, daß jeder torische Ring zwischen den ihn verklemmenden zylindrischen Flächen ohne zu Rutschen um sich selbst abrollt, wobei er eine oder mehrere vollständige Umdrehung(en) um sich selbst ausführt.

2. Verfahren zum Herstellen einer halblösbaren Verbindung nach Anspruch 1, dadurch gekennzeichnet, daß zwei torische Ringe (7) und (8) jeweils um sich selbst eine Umdrehung machen, während der Vorgang der axialen Verriegelung der zylindrischen Hülse (6) stattfindet, die auf diese Weise einen Wege zurücklegt, der das Doppelte der tatsächlichen Verschiebung der torischen Ringe (7) und (8) in Bezug auf das Ansatzstück (1) beträgt, auf das das Ende des Schlauches (5) aufgepreßt ist.

3. Verfahren zum Herstellen einer halblösbaren Verbindung nach Anspruch 1, dadurch gekennzeichnet, daß mehrere torische Ringe jeweils um sich selbst mindestens zwei Umdrehungen ausführen, während der Vorgang der axialen Verriegelung der zylindrischen Hülse (6) stattfindet, um so auf dem Ansatzstück (1) angeordnete Verdickungen, Oliven oder Rasten zu überwinden.

4. Verfahren zum Herstellen einer halblösbaren Verbindung nach Anspruch 1, dadurch gekennzeichnet, daß ein torischer Ring (7′) um sich selbst eine Umdrehung ausführt, während der Vorgang der axialen Verriegelung der zylindrischen Hülse (6′) stattfindet, um so eine auf dem Ansatzstück (1′) angeordnete Verdickung zu überwinden, wobei die zylindrische Hülse (6′) an einer Schulter des Ansatzstückes (1′) zur Anlage gelangt, wo sie anschließend durch eine bajonettartige Anordnung verklemmt oder verriegelt wird.

**Claims**

1. Method for making a semi-detachable connection, which allows retrieval, between a reinforced elastomer hose and a rigid, essentially cylindrical connector, based on radial crushing of the hose end by at least one rubber O-ring, comprising the following steps:
 – preparation of a cylindrical sleeve (6, 6′) freely engaged on the end of a hose (5, 5′), preferably by means of an assembly jig, to a set distance, to force an O-ring (7) to enter the cylindrical sleeve (6, 6′) by pinching the hose (5, 5′);
 – advancing of the cylindrical sleeve by two rolling intervals so that the O-ring (7, 7′) itself advances one interval with respect to the hose (5, 5′);
 – if desired, a repetition of the operation, if necessary with a slight resilient backward movement, to engage a second O-ring (8) at the point of entry to the cylindrical sleeve (6, 6′), in a position of stable equilibrium;
 – forced fitting of the hose end (5, 5′) on the connector (1), by the usual manoeuvre for fitting a hose to a connector;
 – locking by shifting the cylindrical sleeve (6, 6′) axially over a distance equal to two rolling intervals with respect to the hose end (5, 5′), so that the O-ring or C-rings (7, 7′, 8) pass over (through the thickness of the hose) the ribs of larger diameter provided on the connector (1), moving through one rolling interval in so doing; in such a way that each O-ring rolls over itself, without slipping, between the essentially cylindrical surfaces confining it, and that it makes one or more complete turns over itself in effecting this movement.

2. Method for making a semi-detachable connection according to Claim 1, characterised in that two O-rings (7) and (8) each roll over themselves through one revolution in the course of the axial locking manoeuvre of the cylindrical sleeve (6) which thus travels a distance which is twice the actual displacement of the said O-rings (7) and (8), with respect to the connector (1) on which the hose end (5) is clamped.

3. Method for making a semi-detachable connection according to Claim 1, characterised in that a plurality of O-rings each roll over themselves through at least two revolutions in the course of the axial locking manoeuvre of the cylindrical sleeve (6) to surmount the enlargements, beadings or serrations provided on the connector (1).

4. Method for making a semi-detachable connection according to Claim 1, characterised in that an O-ring (7') rolls over itself through one revolution in the course of the axial locking manoeuvre of the cylindrical sleeve (6') to surmount an enlargement on the connector (1'), the said cylindrical sleeve (6') abutting against a shoulder on the connector (1') in which position it is then crimped, or locked in place by a bayonet type system.

FIG_1

FIG_2a

FIG_2b

FIG_3a

FIG_3b

FIG_4

FIG.5a

FIG.5b

11